# EUROPEAN PATENT SPECIFICATION

(11) **EP 0 768 801 B1**
(45) Date of publication and mention of the grant of the patent: **28.04.2004**
(21) Application number: 96307286.3
(22) Date of filing: 04.10.1996
(51) Int. Cl.: H04N 9/804

(54) **Error correction coding for digital video recording**
Fehlerkorrekturcodierung für digitale Videoaufzeichnung
Codage pour correction d'erreurs pour l'enregistrement de vidéo numérique

(30) Priority: 10.10.1995 KR 9534755
(43) Date of publication of application: 16.04.1997
(73) Proprietor: SAMSUNG ELECTRONICS CO., LTD., Suwon-city, Kyungki-do 441-373 (KR)
(72) Inventor: Kim, Tae-eung, Giheung-eub, Yongin-gun, Kyungki-do (KR)
(74) Representative: Chugg, David John

(56) References cited:
- EP-A- 0 579 156
- EP-A- 0 606 857
- EP-A- 0 624 978
- EP-A- 0 650 296

## Description

The present invention relates to a digital video tape recording and reproducing method, and more particularly, to a digital video tape recording and reproducing method having an improved error correction capability during the operation of a normal reproduction, in a digital video cassette recorder which records and reproduces advanced television (ATV) or digital video broadcasting (DVB) signals.

A commercial digital video cassette recorder (DVCR) for recording and reproducing ATV or DVB signals on a digital video tape has been developed.

Especially, studies into a recording format for a specific reproduction, which satisfies the picture quality and the cost efficiency of a standard definition video cassette recorder (SD-VCR) for recording and reproducing ATV signals, are currently underway. An ATV signal is transmitted to an SD-VCR as a transport packet having an MPEG-2 structure recommended by Moving Picture Experts Group (MPEG).

EP-A-0 624,978 and EP-A-0 650 296 both disclose an apparatus for recording and playing back inner and outer coded digital video data.

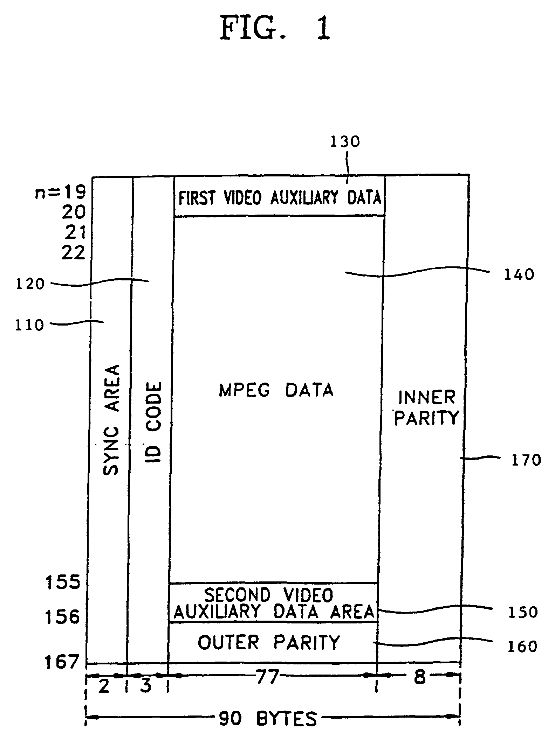

Figure 1 specifically shows a structure of data sync blocks of video sector in a conventional standard definition - video cassette recorder (SD-VCR).

The video sector consists of sync blocks n=19 and 20 for first video auxiliary data area 130, sync blocks n=21∼155 for MPEG data area 140, a sync block n=156 for second video auxiliary data area 150, and sync blocks n=157∼167 for outer parity area 160.

Each sync block consists of 2 bytes of sync area 110, 3 bytes of identification code 120, 77 bytes of data, and 8 bytes of inner parity 170 for an inner code error correction.

A signal of an SD-VCR is an intra frame coded data and has an error correction code (ECC) structure. In the ECC structure, a row code is called an inner code, specified by (85,77), and a column code, an outer code, specified by (149,138).

During recording, an outer code error correction coding is carried out in the column direction by adding 11 bytes of outer parity 160 to 138 bytes of an outer code, and then an inner code error correction coding is carried out in the row direction by adding 8 bytes of inner parity 170 to 77 bytes of an inner code.

During reproduction, after an inner code error correction decoding procedure, errors of each sync block are corrected for up to a maximum 4 of 85 bytes and then an error flag is additionally transmitted if not all the errors are corrected. In an outer code error correction decoding procedure, the errors are corrected by using the error flag for up to 11 of 149 bytes.

Also, in a signal of the SD-VCR, a frame is divided into segments each of which consists of 5 macro blocks, and the amount of bits on a track is fixed by a segment unit. Since the amount of bits is fixed for each 5 macroblocks, a trick reproduction is possible.

On the other hand, ATV and DVB signals are coded by inter frame coding to have an MPEG-2 structure, and normal and trick reproducing data areas for normal and trick reproducing data, respectively, exist separately on a video sector of the SD-VCR recording format.

Here, the inter frame coding is carried out in a group of picture (GOP) unit of 15 frames. Since the coding for the other frames except the intra frame is carried out only for the difference between the neighbouring frames, an error occurring within a frame results in errors of all frames within the corresponding GOP.

Therefore, since ATV and DVB signals are coded using the inter frame coding, in an SD-VCR for recording and reproducing them, there is a problem that they could be fatally damaged if an error occurs in their normal reproducing data.

Therefore, it is an aim of preferred embodiments of the present invention to provide a digital video recording method for improving the error correction capability for normal reproducing data, by recording using an ECC3 area additionally allocated for the normal reproducing data error correction of ATV and DVB signals, during the operation of an outer coding of SD-VCR.

Another aim is to provide a digital video reproducing method for improving the error correction capability for normal reproducing data, by reproducing using an ECC3 area additionally allocated for the normal reproducing data error correction of ATV and DVB signals, during the operation of an outer coding of SD-VCR.

According to a first aspect of the invention, there is provided a method for recording on a video tape inter-coded video data including picture data, which are supplied at a predetermined interval and capable of being independently decoded, the method comprising: dividing the data into normal and trick reproducing data; outer code error correction coding the normal and trick reproducing data; inner code error correction coding the outer error correction coded normal and trick reproducing data; modulating the normal and trick reproducing data and, coded by the error correction coding in the above inner code error correction coding step, to record them each at a predetermined location of a track on a tape; characterised by: allocating an error correction code (ECC3) area in a predetermined position of data sync blocks of the area in which the normal reproducing data area is recorded, for the error correction of the normal reproducing data; first outer code error correction coding the normal and trick reproducing data, after replacing the trick reproducing data with predetermined pattern data, and then adding the generated parity data to the error correction code (ECC3) area; second outer code error correction coding the normal, trick reproducing and auxiliary data, after replacing the trick reproducing data coded in said first outer code error correction coding step, and the additional error correction code (ECC3) area data with predetermined pattern data, and then adding the generated outer parity data to an outer parity data area; inner code error correction coding of each of the normal and the trick reproducing data, coded by the error correction coding in the above second outer code error correction coding step.

Preferably, the first outer code error correction coding is performed before said second outer code error correction coding.

Alternatively, the first outer code error correction coding is performed after said second outer code error correction coding.

According to a second aspect of the invention, there is also provided a digital video tape reproducing method for reproducing the normal and trick reproducing data, recorded in a video sector on a video tape, comprising the steps of: inner code error correction decoding of each of the reproduced normal and trick reproducing data; outer code error correction decoding of each of the normal and trick reproducing data; mixing the normal and trick reproducing data decoded in said first outer code error correction coding step to output a video signal; characterised by: second outer code error correction decoding of the normal and trick reproducing data and auxiliary data, after replacing the trick reproducing data, decoded in said inner code correction decoding step, with predetermined pattern data; first outer code error correction decoding of the normal and trick reproducing data, after replacing the trick reproducing data, decoded in said inner code error correction decoding step, and the data of an error correction code (ECC3) area with predetermined pattern data, wherein said area is allocated in a predetermined position of data sync blocks of the area in which the normal reproducing data is recorded.

Preferably, the second outer code error correction decoding is performed before said first outer code error correction decoding.

Alternatively, the second outer code error correction decoding is performed after said first outer code error correction decoding.

Preferably, in accordance with any of the abovementioned aspects, the predetermined pattern data are predetermined integer data.

For a better understanding of the invention, and to show how embodiments of the same may be carried into effect, reference will now be made, by way of example, to the accompanying diagrammatic drawings, in which:
Figure 1 shows a structure of data sync blocks of video sector in a conventional standard definition - video cassette recorder (SD-VCR);
Figure 2 is a block diagram of an example of an ECC encoder for carrying out a digital video tape recording method according to an embodiment of the present invention;
Figure 3 shows a structure of data sync blocks in a video sector according to an embodiment of the present invention;
Figure 4 shows another structure of data sync blocks in a video sector according to an embodiment;
Figure 5 is a drawing for illustrating the outer error correction coding carried out in the outer ECC coder shown in Figure 2 for the structure of data sync blocks shown in Figure 3;
Figure 6 is a drawing for illustrating the inner error correction coding carried out in the inner ECC coder shown in Figure 2 for the structure of data sync blocks shown in Figure 3;
Figure 7 is a drawing for illustrating the outer error correction coding carried out in the outer ECC coder shown in Figure 2 for the structure of data sync blocks shown in Figure 4;
Figure 8 is a drawing for illustrating the inner error correction coding carried out in the inner ECC coder shown in Figure 2 for the structure of data sync blocks shown in Figure 4; and
Figure 9 is a block diagram of an example of ECC decoder for carrying out a digital video tape reproducing method according to an embodiment of the present invention.

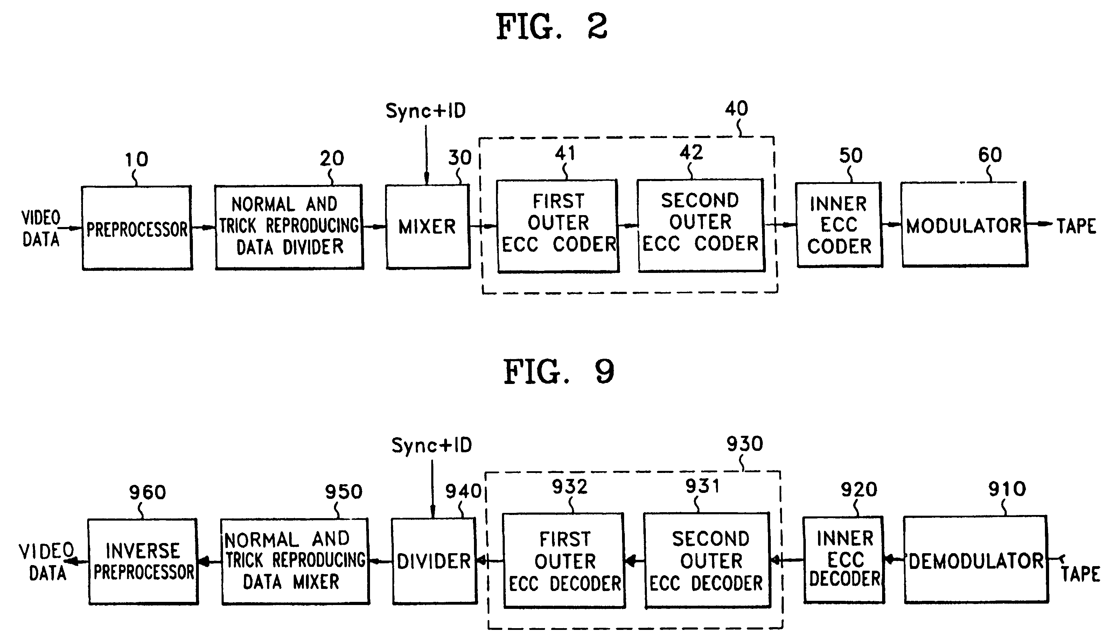

Figure 2 is a block diagram of an example of ECC encoder for carrying out a digital video tape recording method according to an embodiment of the present invention. The ECC encoder shown in Figure 2 includes a preprocessor 10 for isolating a transport packet from a transmitted packet, a normal and trick reproducing data divider 20 for dividing the transmitted packet into normal and trick reproducing data, a mixer 30 for mixing sync signals and identification codes (ID), an outer ECC coder 40 for an outer code error correction coding, consisting of first and second outer ECC coders 41 and 42, an inner ECC coder 50 for an inner code error correction coding, and a modulator 60 for modulating an error correction coded data to be recorded on a tape.

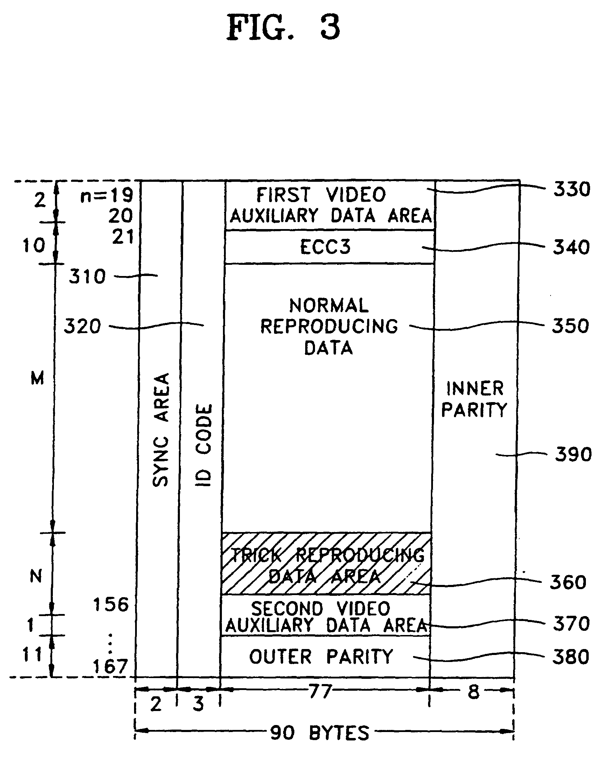

Figure 3 shows a structure of data sync blocks in a video sector according to an embodiment of the present invention.

Here, the data structure includes sync blocks (n=19 and 20) for a first video auxiliary data area 330, sync blocks (21∼30) for an error correction coding (ECC3) area 340, sync blocks (31-130) for a normal reproducing data area 350, sync blocks (131-155) for a trick reproducing data area 360, a sync block (156) for a second video auxiliary data area 370, and sync blocks (157-167) for an outer parity 380.

Each sync block includes 2 bytes of a sync area 310, 3 bytes of an identification code 320, 77 bytes of data, and 8 bytes of an inner parity 390 for an inner code error correction coding.

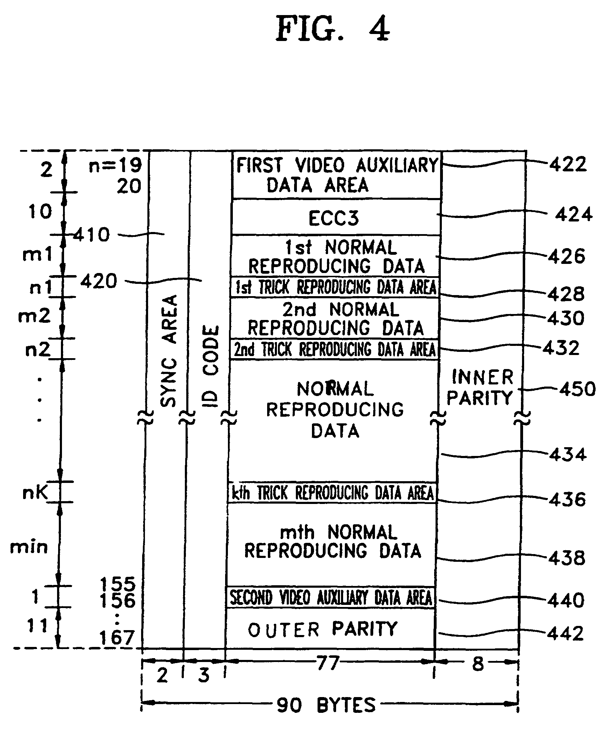

Figure 4 shows another structure of data sync blocks in a video sector according to a further embodiment of the present invention;

In Figure 4, trick and normal reproducing data areas are placed subdivided into k trick and m normal reproducing data areas, respectively, where M, N, mᵢ, and kⱼ are larger than zero.

Figure 4 includes sync blocks (n=19 and 20) for a first video auxiliary data area 422, N sync blocks for the first through kth trick reproducing data areas 428, 432 and 436, sync blocks (21-30) for an error correction coding (ECC3) area 424 of normal reproducing data areas 426, 430, 434 and 438, M-byte sync blocks for the first through mth normal reproducing data areas 426, 430, 434 and 438, a sync block (156) for a second video auxiliary data area 440, and sync blocks (157-167) for an outer parity 442. Here, m1+m2+ ....+mm=M, n1+n2+ ... + nk=N, and M+N=125.

Each sync block includes 2 bytes of a sync area 410, 3 bytes of an identification code 420, 77 bytes of data, and 8 bytes of an inner parity 450 for an inner code error correction coding.

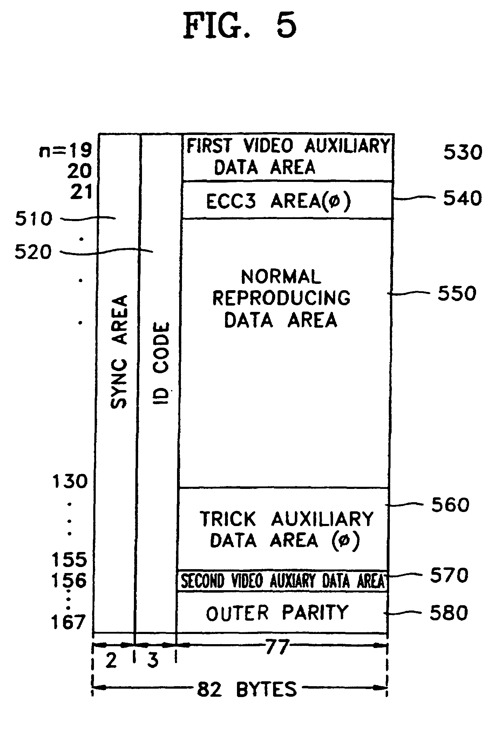

Figure 5 is a drawing for illustrating the outer error correction coding carried out in the outer ECC coder shown in Figure 2 for the structure of data sync blocks shown in Figure 3.

Error correction coding (ECC) blocks shown in Figure 5 include sync blocks (n=19,20) for a first video auxiliary data area 530, sync blocks (21∼30) for an error correction coding area (ECC3) 540, sync blocks (31∼130) for a normal reproducing data area 550, sync blocks (131∼155) for a trick reproducing data area 560, a sync block (156) for a second video auxiliary data area 570, and sync blocks (157∼167) for an outer parity 580.

Each sync block includes 2 bytes of sync area 510, 3 bytes of identification code 520, and 77 bytes of data.

Here, the ECC3 area 540 and trick reproducing data area 560 are shown to be replaced by "0".

During the operation of a second outer coding, these areas are replaced by "0" or predetermined pattern data, and then parity data are generated and added to the outer parity area 580.

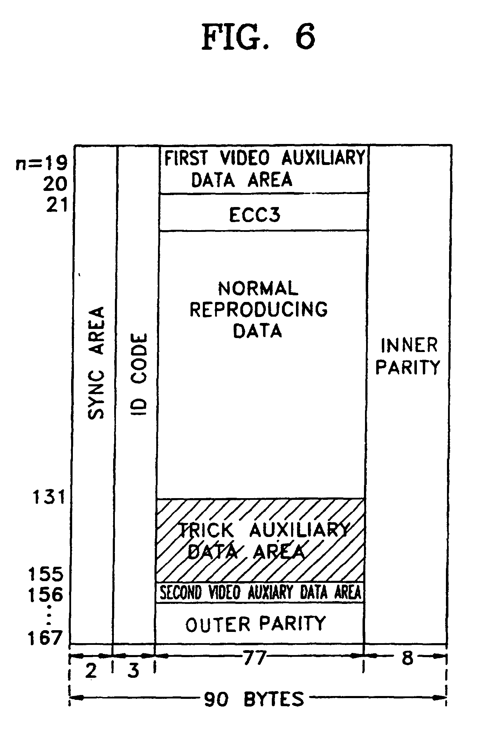

Figure 6 is a drawing for illustrating the inner error correction coding carried out in the inner ECC coder shown in Figure 2 for the structure of data sync blocks shown in Figure 3, in which the data structure is the same as that of Figure 3.

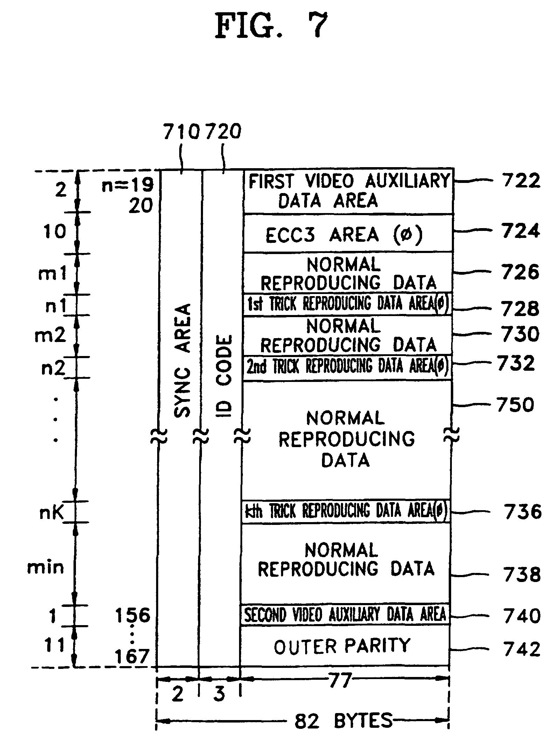

Figure 7 is a drawing for illustrating the outer error correction coding carried out in the outer ECC coder shown in Figure 2 for the structure of data sync blocks shown in Figure 4.

Figure 7 includes sync blocks (n=19 and 20) for a first video auxiliary data area 722, N sync blocks for first through kth trick reproducing data area 728, 732, and 736, sync blocks (21∼30) for an error correction coding (ECC3) area 724 for normal reproducing data areas 726, 730, 750 and 738, M sync blocks for first through mth normal reproducing data areas 726, 730, 750 and 738, a sync block (156) for a second video auxiliary data area 740, and sync blocks (157∼167) for an outer parity (information) area 742. Here, m1+m2+ ....+mm=M, n1+n2+ ... + nk=N, and N+M=125.

Each sync block includes 2 bytes of sync area 710, 3 bytes of an identification code 720, and 77 bytes of data.

Here, The ECC3 area 724 and trick reproducing data areas 728, 732 and 736 are replaced by "0".

During the operation of a first outer coding, they are outer coded by being replaced by "0" or predetermined pattern data, and then are added to the outer parity 742.

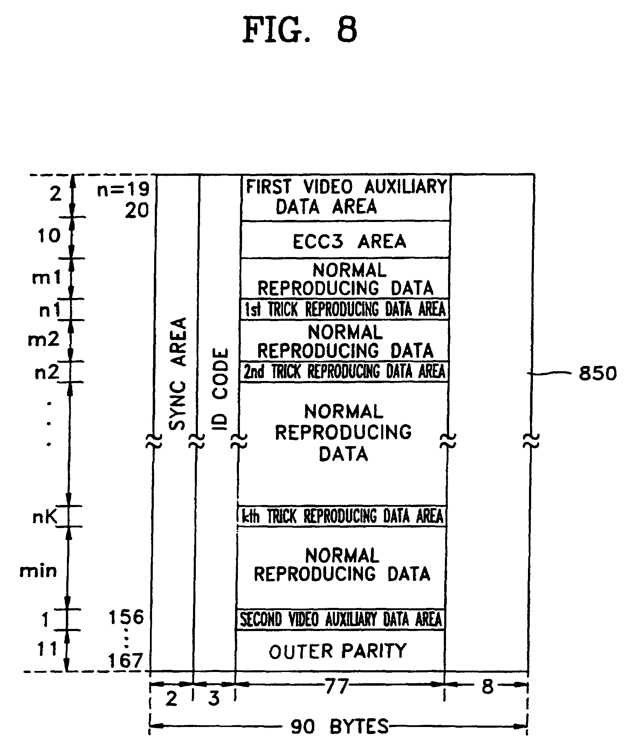

Figure 8 is a drawing for illustrating the inner error correction coding carried out in the inner ECC coder shown in Figure 2 for the structure of data sync blocks shown in Figure 4.

Figure 9 is a block diagram of an example of decoder for carrying out the digital video tape reproducing method according to the present invention.

The ECC decoder shown in Figure 9 includes a demodulator 910 for demodulating a signal read from a tape, an inner ECC decoder 920 for an inner code error correction decoding, an outer ECC coder 930 for an outer code error correction decoding, being consisted of second and first outer ECC decoders 931 and 932, a divider 940 for separating sync signals and identification codes, a normal and trick reproducing data mixer 950 for mixing normal and trick reproducing data, and an inverse preprocessor 960 for outputting ATV and DVB signals by a transmission packeting of normal and trick reproducing data.

The digital video tape recording and reproducing method according to embodiments of the present invention will be described in more detail below referring to Figures 2 through 9.

In Figure 2, video data having an MPEG2 structure, preferably a transport packet structure, of an inter frame signal is input to a preprocessor 10.

The preprocessor 10 separates the video data into transport layers according to the transport packet structure.

Data of a transport packet include video, audio, and user sectors. However, only video sector is considered in the present invention.

Since a DVCR has a trick playing function, trick data are extracted from the transmitted MPEG2 video data. Also, trick data needs to be recorded on a tape after being converted into MPEG2 video and transport packet structures. The normal and trick reproducing data divider 20 divides the MPEG2 video data into normal and trick reproducing data, and then transmits it.

Meanwhile, input data of a DVCR for recording ATV and DVB signals are inter-coded in a GOP unit. In general, this type of data signal includes intra-coded picture (I-picture) data which is independently coded, predicted-coded picture (P-picture) data which is coded by using preceding I-picture or P-picture data by a moving compensation method, and bidirectionally predicted-coded (B-picture) data which is coded by using preceding I-picture or P-picture data and succeeding P-picture data by a moving compensation method.

An embodiment, for a display reproducing order of an ATV signal, determined in MPEG-2, is in the order of I-B-B-P-B-B-P-B-B-P-B-B-P---, and for a transmission bit, I-P-B-B-P-B-B-P-B-B-P-B-B-P---.

Therefore, intra frame data, being able to be independently coded, are selected and used for trick reproducing. Among the intra frame data, only a few coefficients (in general, a DC coefficient and 1∼2 AC coefficients for a block) of intra frame data are picked and transmitted as an MPEG2 structure.

The video area of an SD-VCR is recorded with the same format as shown in Figure 1. However, for an ATV signal, the video area is recorded subdivided as shown in Figure 3 and 4. In FIGs. 3 and 4, there are trick reproducing data areas 360, 428, 432 and 436, and ECC3 areas 340 and 424. Since the MPEG2 is an inter coded bit stream, it is vulnerable to errors. Therefore, in an SD-VCR, an additional error correction code is needed.

The Mixer 30 mixes sync codes and identification codes of normal and trick reproducing data output from the normal and trick reproducing data divider 20. Also, as shown in FIGs. 4 and 5, the mixer 30 inputs normal and trick reproducing data, separately.

The outer and inner ECC coders 40 and 50 carry out error correction coding for data output from the mixer 30. The code used for error correction coding is two-dimensional Reed-Solomon code. The primitive polynomial of the error correction code is, as an example, P (x)=x⁸+x⁴+x³+x²+1.

In the outer ECC coder 40, there are first and second outer ECC coders 41 and 42. Examples of generating polynomials for first and second outer ECC coder 41 and 42 are g(x)=(x+1) (x+a) (x+a²) ... (x+a¹⁰) and g(x)=(x+1)(x+a) (x+a²) ... (x+a⁹), respectively.

The first outer ECC coder 41 carries out error correction coding of a (135; 125) structure by adding 10 sync blocks of ECC3 code. In other words, in the processing of the error correction outer coding of the first outer ECC coder 41, the sizes of pure data and parity are 125 and 10 sync blocks, respectively. As shown in Figure 3, the trick data area 360 of N sync blocks exists within the pure data area of 125 sync blocks. The error correction code area (ECC3) 340 (10 sync blocks), an additional error correction code area, is only for normal reproducing data.

Therefore, for the data structure shown in Figure 3, an error correction coding is carried out on the basis of replacing N sync blocks of trick reproducing data area 360 with "0" or with predetermined pattern data and then adding the generated parity data to ECC3 area 340.

For the data structure shown in Figure 4, an error correction coding is carried out on the basis of replacing the first through the kth trick reproducing data areas 428, 432 and 436, with "0" or with predetermined pattern data and then adding the generated parity data to ECC3 area 424.

The second outer ECC coder 42 carries out error correction coding of a (149, 138) structure by adding an SD-VCR outer code parity. However, the outer parity area is for normal reproducing data. In other words, in the processing of the error correction coding of second outer ECC coder 42, the sizes of pure data and parity are 138 and 11 sync blocks, respectively. As shown in Figure 3, a trick data area 360 of N sync blocks exists within 138 sync blocks of pure data.

Therefore, for the data structure shown in Figure 3, a second outer error correction coding is carried on the basis of replacing the N+10 sync blocks of the trick reproducing data area 360 and the ECC3 area 340 with "0" or with predetermined pattern data and then calculating second other parity data for adding to outer parity area (11 sync blocks) 580, as shown in Figure 5.

For the data structure shown in Figure 4, the second error correction coding is carried out by replacing the first through kth trick reproducing data areas 428, 432 and 436, and ECC3 area 424 with "0" or with predetermined pattern data and then calculating and adding the outer parity data in area (11 sync blocks) 442, as shown in Figure 7.

Therefore, if, in the processing of an error correction coding of outer ECC coder 40, including first and second outer ECC coders 41 and 42, N sync blocks for trick reproducing data and 10 sync blocks for ECC3 area are coded upon being replaced with a predetermined number, a regular pattern data or numbers, the error correction capability in a normal reproducing procedure can be increased in embodiments of the present invention in which 11 sync blocks of outer parity are added for an error correction coding of only normal reproducing data, compared to that in a conventional method in which 11 sync blocks of outer parity are added for an error correction coding of all the 138 sync blocks of data.

In other words, during an extra error correction decoding procedure of a normal reproducing, 11 sync blocks of parity were added to 138 sync blocks of data in a conventional method. However, in the present invention, the error correction is carried out by adding 11 sync blocks of parity to the pure normal reproducing data excluding trick reproducing and ECC3 area data (138-N-10) and 3 sync blocks of video auxiliary data area, thereby increasing the error correction rate without a big modification of a hardware.

Here, the roles of first and second outer code error correction portions, 41 and 42 can be exchanged.

In the inner ECC coder 50, 8 bytes of inner parity 390, are added to 77 bytes of data similarly as in a conventional method, as shown in Figure 6. Here, an inner code generating polynomial of inner code error correction portion 50 is g(x)=(x+1)(x+a)(x+a²) ... (x+a⁷).

In case of the data structure shown in Figure 4, the inner ECC coder 50 adds 8 bytes of the inner parity 450 to 77 bytes of data as shown in Figure 8, as in the conventional method.

Therefore, when inner code parities, 690 and 850, are added as shown in Figure 6 and 8, they are added for each of ECC3, normal, trick, auxiliary, and outer parity data.

Video data, corrected in error correction portions, 40 and 50, are recorded on a tape by modulating through modulator 60.

Figure 9 is a block diagram of an example of an ECC decoder for carrying out a digital video tape recorder reproducing method according to the present invention.

The reproducing method, shown in Figure 9, for reproducing data from a digital video tape, has an inverted order of the recording method, shown in Figure 1. A demodulator 910 demodulates the reproducing data from a tape carrying a modulated signal.

In the inner ECC decoder 920, an inner code error correction decoding is carried out for both normal and trick reproducing data output from the demodulator 910. Also, in the second outer code error correction decoder 931, an outer ECC decoding is carried out for normal and trick reproducing data after the trick reproducing data area is replaced by "0" or by predetermined pattern data.

In the first outer ECC decoder 932, an outer code error correction decoding is carried out for normal and trick reproducing data and ECC3 data after the trick reproducing data, and the ECC3 data area is replaced by "0" or predetermined pattern data.

In a divider 940, sync and identification codes are separated from normal and trick reproducing data output from error correction decoders 930 and 920.

In a normal and trick reproducing data mixer 950, normal and trick reproducing data are separated using sync and identification code outputs from the divider 940, and mixed again according to a normal or a trick reproducing mode. In the inverse preprocessor 960, mixed normal and trick reproducing data are converted into a transport packet to be output as an ATV or a DVB signal.

As described above, since, in an SD-VCR for reproducing ATV and DVB signals according to the present invention, an outer ECC coding is carried out for normal and trick reproducing data after trick reproducing and additionally allocated ECC3 data areas are replaced by a predetermined number or pattern data, the error correction capability can be increased.

## Claims

1. A method for recording on a video tape inter-coded video data including picture data, which are supplied at a predetermined interval and capable of being independently decoded, the method comprising:
dividing (20) the data into normal (140; 350) and trick reproducing (150; 360) data;
outer code error correction coding (40) the normal and trick reproducing data;
inner code error correction coding (50) the outer error correction coded normal and trick reproducing data;
modulating (60) the normal and trick reproducing data, coded by the error correction coding in the above inner code error correction coding step, to record the modulated data each at a predetermined location of a track on a tape;
**characterised by**:
allocating an error correction code (ECC3; 340) area in a predetermined position of data sync blocks of the area in which the normal reproducing data area is recorded, for the error correction of the normal reproducing data;
first outer code error correction coding (41) the normal (350) and trick reproducing (360) data, after replacing the trick reproducing data with predetermined pattern data, and then adding the parity data generated by said first outer coding to the error correction code (ECC3; 340) area;
second outer code error correction coding (42) the normal (350), trick reproducing (360) and auxiliary (330) data, after replacing the trick reproducing data (360) coded in said first outer code error correction coding step, and the additional error correction code (ECC3) area data with predetermined pattern data, and then adding the outer parity data generated by said second outer coding to an outer parity data area (380; 580); and
inner code error correction coding (50) of each of the normal and the trick reproducing data, coded by the error correction coding in the above second outer code error correction coding step.

2. A method for recording on a video tape inter-coded video data according to claim 1, wherein:
said first outer code error correction coding (41) is performed before said second outer code error correction coding (42).

3. A method for recording on a video tape inter-coded video data according to claim 1, wherein:
said first outer code error correction coding (41) is performed after said second outer code error correction coding (42).

4. A digital video tape reproducing method for reproducing the normal and trick reproducing data, recorded in a video sector on a video tape, comprising the steps of:
inner code error correction decoding (920) of each of the reproduced normal and trick reproducing data;
outer code error correction decoding (930) of each of the normal and trick reproducing data;
mixing (950) the normal and trick reproducing data decoded in said first outer code error correction coding step to output a video signal;
**characterised by**:
second outer code error correction decoding (931) of the normal and trick reproducing data and auxiliary data, after replacing the trick reproducing data, decoded in said inner code correction decoding step, with predetermined pattern data; and
first outer code error correction decoding (932) of the normal and trick reproducing data, after replacing the trick reproducing data, decoded in said inner code error correction decoding step, and the data of an error correction code (ECC3; 340) area with predetermined pattern data, wherein said area is allocated in a predetermined position of data sync blocks of the area in which the normal reproducing data is recorded.

5. A digital video tape reproducing method according to claim 4, wherein:
said second outer code error correction decoding (931) is performed before said first outer code error correction decoding (932).

6. A digital video tape reproducing method according to claim 4, wherein:
said second outer code error correction decoding (931) is performed after said first outer code error correction decoding (932).

7. A method as claimed in any of claims 1 to 6, wherein said predetermined pattern data are predetermined integer data.

## Patentansprüche

1. Verfahren zum Aufzeichnen von intercodierten Videodaten auf einem Videoband, die in einem vorbestimmten Intervall zugeführt werden und in der Lage sind, unabhängig decodiert zu werden, wobei das Verfahren umfasst:
Teilen (20) der Daten in Normal- (140; 350) und Trickwiedergabedaten (150; 360);
Außencode-Fehlerkorrekturcodieren (40) der Normal- und Trickwiedergabedaten;
Innencode-Fehlerkorrekturcodieren (50) der äußeren fehlerkorrekturcodierten Normal- und Trickwiedergabedaten;
Modulieren (60) der durch die Fehlerkorrekturcodierung in dem obigen Innencode-Fehlerkorrekturcodierungsschritt codierten Normal- und Trickwiedergabedaten, um die modulierten Daten je an einer vorbestimmten Stelle einer Spur auf einem Band zu speichern,
**gekennzeichnet durch**:
Zuteilen eines Fehlerkorrekturcode- (ECC3; 340) Bereiches in einer vorbestimmten Position von Daten-Sync-Blöcken des Bereiches, in dem der Normalwiedergabedatenbereich aufgezeichnet wird, für die Fehlerkorrektur der Normalwiedergabedaten;
erste Außencode-Fehlerkorrekturcodierung (41) der Normal- (350) und Trickwiedergabedaten (360) nach Ersetzen der Trickwiedergabedaten **durch** vorbestimmte Musterdaten und dann Hinzufügen der **durch** erste äußere Codierung erzeugten Paritätsdaten zu dem Fehlerkorrekturcode- (ECC3; 340) Bereich;
zweite Außencode-Fehlerkorrekturcodierung (42) der Normal- (350), Trickwiedergabe- (360) und Hilfs- (330) daten nach Ersetzen der in dem ersten Außencode-Fehlerkorrekturcodierungsschritt codierten Trickwiedergabedaten (360) und der zusätzlichen Fehlerkorrekturcode- (ECC3) Bereichsdaten **durch** vorbestimmte Musterdaten und dann Hinzufügen der **durch** die zweite äußere Codierung erzeugten Paritätsdaten zu einem äußeren Paritätsdatenbereich (380; 580), und
Innencode-Fehlerkorrekturcodierung (50) aller **durch** die Fehlerkorrekturcodierung in dem obigen zweiten Außencode-Fehlerkorrekturcodierungsschritt codierten Normal- und Trickwiedergabedaten.

2. Verfahren zum Aufzeichnen von intercodierten Videodaten auf einem Videoband nach Anspruch 1, wobei:
die erste Außencode-Fehlerkorrekturcodierung (41) vor der zweiten Außencode-Fehlerkorrekturcodierung (42) durchgeführt wird.

3. Verfahren zum Aufzeichnen von intercodierten Videodaten auf einem Videoband nach Anspruch 1, wobei:
die erste Außencode-Fehlerkorrekturcodierung (41) nach der zweiten Außencode-Fehlerkorrekturcodierung (42) durchgeführt wird.

4. Digitalvideoband-Wiedergabeverfahren zum Wiedergeben der in einem Videosektor auf einem Videoband aufgezeichneten Normal- und Trickwiedergabedaten, das die folgenden Schritte umfasst:
Innencode-Fehlerkorrekturdecodieren (920) aller wiedergegebenen Normal- und Trickwiedergabedaten;
Außencode-Fehlerkorrekturdecodieren (930) aller Normal- und Trickwiedergabedaten;
Mischen (950) der in dem ersten Außencode-Fehlerkorrekturdecodierungsschritt decodierten Normal- und Trickwiedergabedaten, um ein Videosignal auszugeben,
**gekennzeichnet durch**:
zweite Außencode-Fehlerkorrekturdecodierung (931) der Normal- und Trickwiedergabedaten und Hilfsdaten nach Ersetzen der in dem Innencode-Fehlerkorrekturdecodierungsschritt decodierten Trickwiedergabedaten **durch** vorbestimmte Musterdaten, und
erste Außencode-Fehlerkorrekturdecodierung (932) der Normal- und Trickwiedergabedaten nach Ersetzen der in dem Innencode-Fehlerkorrekturdecodierungsschritt decodierten Trickwiedergabedaten und der Daten eines Fehlerkorrekturcode- (ECC3; 340) Bereiches **durch** vorbestimmte Musterdaten, wobei der Bereich in einer vorbestimmten Position von Daten-Sync-Blöcken des Bereiches zugeteilt wird, in dem die Normalwiedergabedaten aufgezeichnet werden.

5. Digitalvideoband-Wiedergabeverfahren nach Anspruch 4, wobei:
die zweite Außencode-Fehlerkorrekturdecodierung (931) vor der ersten Außencode-Fehlerkorrekturdeocdierung (932) durchgeführt wird.

6. Digitalvideoband-Wiedergabeverfahren nach Anspruch 4, wobei:
die zweite Außencode-Fehlerkorrekturdecodierung (931) nach der ersten Außencode-Fehlerkorrekturdeocdierung (932) durchgeführt wird.

7. Verfahren nach einem der Ansprüche 1 bis 6, wobei die vorbestimmten Musterdaten vorbestimmte Ganzzahldaten sind.

## Revendications

1. Procédé d'enregistrement sur une bande vidéo de données vidéo inter-codées incluant des données d'image, qui sont délivrées selon un intervalle prédéterminé et pouvant être indépendamment décodées, le procédé comportant les étapes consistant à :
diviser (20) les données en données de lecture normale (140 ; 350) et truquée (150 ; 360),
soumettre à un codage de correction d'erreurs de code extérieures (40) les données de lecture normale et truquée,
soumettre à un codage de correction d'erreurs de code intérieures (50) les données de lecture normale et truquée codées à correction d'erreurs extérieures,
moduler (60) les données de lecture normale et truquée, codées par le codage de correction d'erreurs à l'étape de codage de correction d'erreurs de code intérieures ci-dessus, pour enregistrer chaque donnée modulée à un emplacement prédéterminé d'une piste sur une bande,
**caractérisé par** les étapes consistant à :
affecter une zone de code de correction d'erreurs (ECC3 ; 340) à une position prédéterminée de blocs de synchronisation de données de la zone dans laquelle la zone de données de lecture normale est enregistrée, pour la correction d'erreurs des données de lecture normale,
soumettre à un premier codage de correction d'erreurs de code extérieures (41) les données de lecture normale (350) et truquée (360), après avoir remplacé les données de lecture truquée par des données de motif prédéterminées, et ajouter ensuite les données de parité générées par ledit premier codage extérieur à la zone de code de correction d'erreurs (ECC3 ; 340),
soumettre à un second codage de correction d'erreurs de code extérieures (42) les données de lecture normale (350), de lecture truquée (360), et des données auxiliaires (330), après avoir remplacé les données de lecture truquée (360) codées à ladite première étape de codage de correction d'erreurs de code extérieures, et les données de la zone de code de correction d'erreurs supplémentaires (ECC3) par des données de motif prédéterminées, et ajouter ensuite les données de parité extérieures générées par ledit second codage extérieur à une zone de données de parité extérieures (380 ; 580), et
soumettre à un codage de correction d'erreurs de code intérieures (50) chacune des données de lecture normale et truquée, codées par le codage de correction d'erreurs à la seconde étape de codage de correction d'erreurs de code extérieures ci-dessus.

2. Procédé d'enregistrement sur une bande vidéo de données vidéo inter-codées selon la revendication 1, dans lequel :
ledit premier codage de correction d'erreurs de code extérieures (41) est exécuté avant ledit second codage de correction d'erreurs de code extérieures (42).

3. Procédé d'enregistrement sur une bande vidéo de données vidéo inter-codées selon la revendication 1, dans lequel :
ledit premier codage de correction d'erreurs de code extérieures (41) est exécuté après ledit second codage de correction d'erreurs de code extérieures (42).

4. Procédé de lecture de bande vidéo numérique destiné à lire les données de lecture normale et truquée, enregistrées dans un secteur vidéo sur une bande vidéo, comportant les étapes consistant à :
soumettre à un décodage de correction d'erreurs de code intérieures (920) chacune des données de lecture normale et truquée lues,
soumettre à un décodage de correction d'erreurs de code extérieures (930) chacun des données de lecture normale et truquée,
mélanger (950) les données de lecture normale et truquée décodées à ladite première étape de codage de correction d'erreurs de code extérieures pour délivrer en sortie un signal vidéo,
**caractérisé par** les étapes consistant à :
soumettre à un second décodage de correction d'erreurs de code extérieures (931) les données de lecture normale et truquée et les données auxiliaires, après avoir remplacé les données de lecture truquée, décodées à ladite étape de décodage de correction d'erreurs de code intérieures, par des données de motif prédéterminées, et
soumettre à un premier décodage de correction d'erreurs de code extérieures (932) les données de lecture normale et truquée, après avoir remplacé les données de lecture truquée, décodées à ladite étape de décodage de correction d'erreurs de code intérieures, et les données d'une zone de code de correction d'erreurs (ECC3 ; 340) par des données de motif prédéterminées, ladite zone étant affectée à une position prédéterminée de blocs de synchronisation de données de la zone dans laquelle les données de lecture normale sont enregistrées.

5. Procédé de lecture de bande vidéo numérique selon la revendication 4, dans lequel :
ledit second décodage de correction d'erreurs de code extérieures (931) est exécuté avant ledit premier décodage de correction d'erreurs de code extérieures (932).

6. Procédé de lecture de bande vidéo numérique selon la revendication 4, dans lequel :
ledit second décodage de correction d'erreurs de code extérieures (931) est exécuté après ledit premier décodage de correction d'erreurs de code extérieures (932).

7. Procédé selon l'une quelconque des revendications 1 à 6, dans lequel lesdites données de motif prédéterminées sont des données de nombre entier prédéterminées.
